Europäisches Patentamt

European Patent Office

Office européen des brevets

(19)

(11) Veröffentlichungsnummer: **0 141 009**

**A2**

(12) # EUROPÄISCHE PATENTANMELDUNG

(21) Anmeldenummer: 84103637.9

(22) Anmeldetag: 22.10.81

(51) Int. Cl.⁴: **G 01 N 21/07**
**B 04 B 5/04**

(30) Priorität: 25.11.80 DE 3044372

(43) Veröffentlichungstag der Anmeldung:
15.05.85 Patentblatt 85/20

(84) Benannte Vertragsstaaten:
AT BE CH DE FR GB IT LI LU NL SE

(60) Veröffentlichungsnummer der früheren
Anmeldung nach Art. 76 EPÜ: **0 052 770**

(71) Anmelder: Boehringer Mannheim GmbH
Sandhoferstrasse 116
D-6800 Mannheim 31(DE)

(72) Erfinder: Edelmann, Hermann
Diemendorfer Strasse 21
D-8132 Tutzing-Unterzeismering(DE)

(72) Erfinder: Pasch, Manfred
Anton-Bartl-Strasse 7
D-8132 Tutzing(DE)

(72) Erfinder: Klose, Sigmar, Dr. Phil.
Breitenloh 7
D-8131 Berg 2(DE)

(72) Erfinder: Haar, Hans-Peter, Dr. rer. nat.
Trifthofstrasse 17
D-8120 Weilheim(DE)

(72) Erfinder: Mann, Karlheinz
Herbststrasse 15
D-8120 Weilheim(DE)

(54) Analyseeinsatzelement für die Rotoreinheit eines Zentrifugalanalysators.

(57) Analyseeinsatzelement (16) für die Rotoreinheit (10) eines Zentrifugalanalysators zur analytischen Bestimmung mindestens eines Bestandteils einer Probenflüssigkeit.

Es enthält mindestens ein vorgespacktes Reagenz, das während der Rotation der Rotoreinheit (10) mit der Probe vermischt wird. Halterungsteile (42) sind zur Halterung an der Rotorbasis (12) der Rotoreinheit (10) vorgesehen. Eine Meßkammer (84) dient zum Messen eines für den Nachweis von Bestandteilen der Probe charakteristischen Parameters.

Eine besonders einfache Bedienung, flexible Nutzung und zugleich zuverlässige Funktionsweise des Zentrifugalanalysators wird dadurch erreicht, daß das Einsatzelement Kammern (29) für die Aufnahme der Probenblüssigkeit und Fluidkanäle (86) zur Verbindung der Probenkammern (29) mit den Meßkammern (84) aufweist, daß die Fluidkanäle (86) mindestens ein vorgepacktes Reagenz enthalten und daß die Halterungsteile (42) dergestalt ausgebildet sind, daß das Analyseelement auf der Rotorbasis (12) des Rotors (10) im Betrieb positionsstabil in einer solchen Position gehalten wird, daß die Probenkammern (29) radial einwärts von den Meßkammern (84) liegen, so daß die Probenflüssigkeit von den Probenkammern (29) bei Drehung des Rotors unter Einwirkung der Zentrifugalkraft durch Fluidkanäle (86) in die Meßkammern (84) getrieben wird, wobei es mit dem Reagenz in Kontakt gebracht und mindestens teilweise vermischt wird.

FIG. 2

BOEHRINGER MANNHEIM GMBH 2411-I

Analyseeinsatzelement für die Rotoreinheit eines Zentrifugalanalysators

Die vorliegende Erfindung betrifft ein Analyseeinsatzelement für die Rotoreinheit eines Zentrifugalanalysators nach dem Oberbegriff des Anspruchs 1.

Die vorliegende Patentanmeldung ist eine Teilanmeldung zur Europäischen Patentanmeldung 81 108 752.7 (Veröffentlichungsnummer 0052770), auf die gemäß Regel 25 Abs. (2) der Ausführungsordnung zum europäischen Patentübereinkommen Bezug genommen wird. Analyseeinsatzelemente gemäß der vorliegenden Erfindung können zur Verwendung mit einem Zentrifugalanalysator der in der Stammanmeldung beschriebenen Art besonders angepaßt sein.

Zentrifugalanalysatoren sind seit einer Reihe von Jahren für Zwecke der chemischen Analyse, insbesondere in der klinischen Chemie, gebräuchlich. Sie haben kreissymmetrisch aufgebaute Rotoreinheiten mit einer Mehrzahl von radial verlaufenden Analysekanälen. Jeder Analysekanal weist von innen nach außen üblicherweise einen muldenförmig ausgebildeten Reagenzraum, einen Probenraum und einen Meßraum auf, der bei den bekannten Einrichtungen als optische Küvette ausgebildet ist. Die Rotoreinheit läßt sich gliedern in eine Rotorbasis und einen auf der Rotorbasis drehfest gelagerten Rotorkopf. Die Rotorbasis ist üblicherweise als Platte oder Rahmen ausgebildet und mit der Achse des Rotorantriebs fest verbunden. Mit dem Begriff Rotorkopf wird der übrige Teil der Rotoreinheit bezeichnet, der insbesondere die erwähnten Analysekanäle einschließt. Bei neueren Zentrifugalanalysatoren ist der Rotorkopf als Einheit auswechselbar und wird im Betrieb drehfest mit der Rotorbasis verbunden. Rotorkopf und Rotorbasis können jeweils sehr verschieden ausgestaltet sein und sich insbesondere auch im Durchmesser ihrer äußeren Begrenzung wesentlich unterscheiden. So kann die Rotorbasis beispielsweise nur aus einer mit der Rotorantriebsachse einstückig verbundenen Halterung für den Rotorkopf bestehen, die von dem Rotorkopf im Betrieb vollständig überlagert wird.

Der Rotorkopf wird bei den bekannten Einrichtungen im Stand mit Reagenzien und Proben befüllt. Eine dazu verwendbare Einrichtung ist in der DE-AS 26 26 810 beschrieben, welcher auch der Aufbau eines typischen Rotors zu entnehmen ist. Wie aus dieser Druckschrift zu entnehmen ist, ist zum automatischen Befüllen des Rotors eine komplizierte mechanische Einrichtung notwendig.

Nach dem Befüllen werden die bekannten Rotorköpfe in den Zentrifugalanalysator eingesetzt und mit der Rotorbasis verbunden. Der Rotor wird in schnelle Drehung versetzt, wobei bei manchen derartigen Einrichtungen wechselnde Drehzahlen zum Mischen verwendet werden. Durch die Zentrifugalbeschleunigung beim Rotieren des Rotors wird das Reagenz aus seiner Kammer in die Probenkammer und dann beide zusammen in die Meßkammer befördert. Dort wird dann bei laufendem Rotor gemessen. Diese Messung besteht bei den bekannten Einrichtungen aus einer Bestimmung der optischen Dichte der Flüssigkeit in den als optische Küvetten ausgebildeten Meßkammern. Dank moderner elektronischer Auswerteeinrichtungen kann bei jeder Rotorumdrehung die Absorption in jeder Küvette gemessen werden. Dadurch läßt sich die Absorption in sämtlichen Küvetten nahezu kontinuierlich beobachten. Bei einer typischen Rotationsgeschwindigkeit von 1000 Umdrehungen pro Minute werden für jede Küvette je Minute 1000 Messungen durchgeführt.

- 3 -

Aufgrund dieses Verfahrens ergibt sich eine mit konventionellen Analysegeräten kaum bei vergleichbarer Analysenfrequenz zu erreichende Genauigkeit der Messung, insbesondere bei sogenannten kinetischen Analysebestimmungen, bei denen die Geschwindigkeit des Reaktionsverlaufs Aufschluß über die Konzentration eines bestimmten Bestandteils der Probe gibt.

Die bekannten Zentrifugalanalysatoren haben eine Reihe wesentlicher Vorteile, jedoch auch erhebliche Nachteile. Eine Zusammenfassung der wesentlichsten Anforderungen an ein optimales Analysegerät ist bereits einer der ersten Veröffentlichungen über Zentrifugalanalysatoren zu entnehmen, nämlich dem Artikel von Norman G. Anderson in "Analytical Biochemistry", Band 28, Seite 545-562 aus dem Jahre 1969. Eine dieser Anforderungen ist die praktisch gleichzeitige Messung mehrerer Reaktionen, die, wie oben beschrieben, eine bessere Verfolgung der einzelnen Reaktionsverläufe ermöglicht. Eine andere Forderung richtet sich darauf, daß die Volumina der Reagenzien und Proben möglichst klein sein sollen. Auch diese Forderung wird von den bekannten Zentrifugalanalysatoren weitgehend erfüllt, eine Verbesserung ist jedoch weiterhin wünschenswert. Zentrifugalanalysatoren erlauben auch ohne weiteres den Anschluß an moderne Datenverarbeitungssysteme zur Auswertung der Meßergebnisse, d.h. sowohl zur Umwandlung der Absorptionswerte in die gewünschten Konzentrationsangaben, als auch zur statistischen Auswertung dieser Konzentrationen, um dem Arzt möglichst weitgehend aufbereitete Angaben machen zu können.

Andere bereits in diesem frühen Artikel gestellte Anforderungen werden von den derzeit gebräuchlichen Zentrifugalanalysatoren nicht im wünschenswerten Ausmaß erfüllt. Die bekannten Geräte erfordern immer noch ein

- 4 -

hohes Maß an Aufmerksamkeit vom Personal, sie sind
nicht ausreichend einfach auch für ungeschultes Personal
zu bedienen und sie sind noch nicht flexibel und varia-
·bel genug, um die sehr verschiedenen Anforderungen, insbesondere im Betrieb eines klinischen Labors ,zu erfüllen.

Diese Mängel haben im Laufe der Jahre zu einer Vielzahl von Ausgestaltungen des ursprünglichen Konzepts
Anlaß gegeben, die zu immer komplizierteren Rotorkonstruktionen führten. Diese Rotoren wurden damit teuer
in der Herstellung und sind doch nicht in der Lage,
alle verschiedenen Anforderungen der unterschiedlichen
in der klinischen Chemie üblichen analytischen Bestimmungen
optimal zu erfüllen.

meisten
Die bekannten Rotoren sind insbesondere jeweils nur für
die Durchführung einer analytischen Bestimmung für eine
Vielzahl von Proben in einem Rotorlauf geeignet. In
der Regel müssen im klinischen Labor aber von einer
Probe, also beispielsweise vom Blut eines Patienten,
eine Reihe verschiedener analytischer Bestimmungen
durchgeführt werden, die man insgesamt auch als Profil
bezeichnet. Dies bedingt bei den bekannten Analysatoren
einen erheblichen organisatorischen Aufwand.Die einzelnen,
zum Beispiel auf einer Anforderungskarte vom Arzt dem
klinischen Labor mitgeteilten notwendigen analytischen
Bestimmungen müssen nämlich in getrennten Rotorläufen
nach und nach auf einem oder mehreren Zentrifugalanalysatoren durchgeführt werden. Danach werden die getrennt
bestimmten Daten zusammengefaßt und dem Arzt mitgeteilt.
Dieses komplizierte Verfahren bedingt nicht nur einen
großen organisatorischen Aufwand, sondern ist bedauerlicherweise auch immer wieder die Ursache von Übermittlungsfehlern, aus denen dann möglicherweise  falsche
therapeutische Maßnahmen des Arztes resultieren können.
Es besteht also ein Bedarf nach Zentrifugalanalysatoren,
die variabler und flexibler verschiedenen Aufgaben
angepaßt werden können und sich insbesondere zu Profilanalysen oder wenigstens zu mehreren verschiedenen analytischen Bestimmungen in einem Rotorlauf eignen. Dies ist insbesondere auch für die Notfallanalytik wichtig, wo unter Umständen in kürzester Zeit mehrere verschiedene analytische Bestimmungen für eine Probe, d.h. für einen Patienten durchgeführt werden müssen.

In der US-A- 3 713.775 und in der US-A-4 135.883 sind zwei verschiedene Entwicklungsstadien eines Zentrifugalanalysators beschrieben, mit dem im Prinzip mehrere verschiedene analytische Bestimmungen von einer oder mehreren Proben möglich sind. Zu diesem Zweck trägt der Rotor des dort beschriebenen Geräts Küvetten, die in seitlich angeordneten Räumen Kunststoffbeutel enthalten, in denen sich je nach der auszuführenden analytischen Bestimmung verschiedene Reagenzien befinden können. Die Beutel haben eine Naht, die in definierter Weise aufreißen soll, wenn der die Küvetten tragende Rotor über eine bestimmte Drehzahl beschleunigt wird. Die Reagenzien sind im Fall des älteren Patents pulverförmig, bei dem eine Weiterentwicklung des gleichen Geräts betreffenden jüngeren Patent dagegen flüssig, offenbar um die mit dem definierten Aufreißen der Beutel verbundenen Probleme zu vermindern, was aber neue Probleme mit der Verdampfung der Reagenzien verursacht (US-A- 4 135.883, Spalte 5, Zeile 29-38). Eine von der Meßkammer getrennte Probenkammer oder ein Fluidkanal ist nicht vorgesehen. Die Reagenzien sollen sich nach dem Aufreißen der Beutel unmittelbar in den Küvettenraum ergießen und dort mit der Probe mischen. Die speziellen Reagenzienbeutel müssen nach einem aufwendigen Verfahren mit Hilfe eines Lasers hergestellt werden. Dennoch wurde mit diesem Prinzip keine zuverlässige Funktion erreicht.

Aufgabe der vorliegenden Erfindung ist es, ein Analyseeinsatzelement für die Rotoreinheit eines Zentrifugalanalysators so auszugestalten, daß es unter Vermeidung
der Nachteile bekannter Zentrifugalanalysatoren eine
möglichst einfache Bedienung, zuverlässige Betriebsweise
und eine möglichst flexible und vielseitige Nutzung
des Gerätes ermöglicht.

Zur Lösung dieser Aufgabe schlägt die Erfindung vor,
ein Einsatzelement der eingangs bezeichneten Art mit
den kennzeichnenden Merkmalen des Anspruchs 1 auszugestalten.

Jedes Einsatzelement enthält Einrichtungen zur Durchführung von Teilschritten analytischer Bestimmungen.
Die Einsatzelemente können in ihrer äußeren Form verschieden sein, sie können sich aber beispielsweise auch nur
in der chemischen Zusammensetzung eines Teiles ihre Bestandteile unterscheiden. Wesentlich ist, daß durch den
erfindungsgemäßen Vorschlag, statt der bisher üblichen
einheitlich aufgebauten Rotoren solche zu verwenden,
deren Rotorkopf eine Mehrzahl verschiedener Einsatzelemente aufnehmen kann, eine wesentlich erhöhte Variabilität
erreicht wird. Während die bekannten einteiligen Rotoren, wie oben beschrieben, nur für die Erfüllung jeweils einer bestimmten Aufgabe,nämlich
in der Regel für die Bestimmung von jeweils einem chemischen
Bestandteil der Probe an einer Vielzahl von Proben in
einem Rotorlauf (sogenannter "Batch"-Betrieb) geeignet
waren, kann bei der vorliegenden Erfindung jedes Einsatzelement für eine bestimmte Aufgabe optimal
angepaßt werden. Durch die Möglichkeit,eine Mehrzahl verschiedener Einsatzelemente mit der Rotorbasis zu verbinden, läßt sich für jeden Rotorlauf ein individuell angepaßter Rotor zusammenstellen, der dann in wesentlich
vielfältigerer Art und Weise einsetzbar ist.

Zum Beispiel sind dadurch auf einfache Weise Bestimmungen mehrerer Bestandteile einer Probe (Profilbestimmungen) in einem Rotorlauf möglich. Außerdem ergeben sich erhebliche Handhabungsvereinfachungen, wie im folgenden noch dargestellt wird.

Gemäß bevorzugter Ausführungsformen der Erfindung können Analyseeinsatzelemente von verschiedener Bauweise verwendet werden. Dazu gehören Einfach-Analyseelemente, welche Einrichtungen zur Bestimmung jeweils eines Bestandteiles der Probe einschließen und ebenso Mehrfach-Analyseelemente, die Einrichtungen zur gleichzeitigen Bestimmung mehrerer Bestandteile von einer oder mehreren Proben aufweisen. Diese Einsatzelemente können nun ganz auf die jeweilige Analyseaufgabe abgestimmt sein. So können sie in ihrer Formgebung verschiedene Analysekanäle aufweisen, die mit flüssigen Reagenzien beschickt werden.

Sie können aber auch schon Reagenzien vorgepackt, insbesondere in fester Form, enthalten, die dann, wie später erläutert wird, durch die verdünnte Probe gelöst und mit dieser gemischt werden. Der Begriff "Einsatzelement" bzw. "Analyseelement" schließt jede Form und Größe ein.

Eine in Aufsicht auf den Rotor gesehen kreissektorförmige Gestaltung der Einsatzelemente ist besonders bevorzugt, weil sich dadurch verschiedene Einsatzelemente nahtlos aneinander anschließen und sich aus der Gesamtheit der Einsatzelemente eine ununterbrochene Oberfläche des Rotorkopfes ergibt, wenn der Rotor vollständig mit Einsatzelementen beladen wird, was jedoch nicht notwendig ist. Der Begriff "kreissektorförmig" soll hier so verstanden werden, daß die Begrenzungslinien der Sektoren, also in Aufsicht auf den Rotor die Begrenzungslinien der Einsatzelemente sich im wesentlichen entlang Radien des Rotorkreises erstrecken. Selbstverständlich schließt der erfinderische Vorschlag Lösungen ein, bei denen die Außenkanten von dem Verlauf dieser Radien in einer bestimmten, sich bei den verschiedenen Elementen wiederholenden Art und Weise abweichen, so daß die verschiedenen Einsatzelemente sich, obwohl sie keine geraden Seitenflächen haben, zu einer ununterbrochenen Belegung der Rotorbasis ergänzen. Eine derartige Gestaltung kann insbesondere vorteilhaft sein, um die Einsatzelemente durch formschlüssige Ausgestaltung ihrer Seitenflächen aneinander zu haltern.

Bevorzugt sind die Einsatzelemente und die Halterungsteile so ausgestaltet und angeordnet, daß alle Meßkammern auf einem Kreisumfang des Rotorkopfes liegen, d.h. sie haben den gleichen radialen Abstand von dessen Zentrum, damit eine einzige Auswerteeinheit zur Bestimmung der charakteristischen Parameter ausreicht, die zum Nachweis von Bestandteilen der Probe gemessen werden müssen. Wie erwähnt, wird bei den bekannten Zentrifugalanalysatoren und bevorzugt auch bei den erfindungsgemäßen Einrichtung als für den Nachweis von Bestandteilen der Probe charakteristischer Parameter die optische Absorption bei einer oder mehreren Wellenlängen bestimmt. Die Erfindung ist jedoch nicht auf derartige optische Messungen beschränkt. Gerade durch die neuartige Variabilität der erfindungsgemäßen Einrichtung kann es möglich werden, auch gänzlich andere Bestimmungen in einem Zentrifugalanalysator durchzuführen. Dazu gehören beispielsweise elektrische Messungen im Zusammenhang mit elektrochemischen Analyseverfahren verschiedenster Art. In diesem Fall weisen die Meßkammern Elektroden auf, deren Signale in geeigneter Weise, etwa über Schleifkontakte oder drahtlos, der Auswerteeinrichtung des Gerätes zugeführt werden. In solchen Fällen, aber auch bei rein optischen Messungen, können die Meßkammern durchaus auch auf verschiedenen Kreisumfängen des Rotorkopfes liegen.

Gemäß weiterer bevorzugter Ausführungsformen tragen die Einsatzelemente Codierungen bezüglich der Probe und/oder der mit dem jeweiligen Element zu bestimmenden Bestandteile der Probe. Diese Codierungen sind durch eine in dem Zentrifugalanalysator eingebaute Leseeinrichtung lesbar, um dem Gerät auf diese Weise wesentliche Daten für die Auswertung mitzuteilen und gleichzeitig eine Kontrolle für die richtige Beschickung des Rotors mit Einsatzelementen durch das Bedienungspersonal zu erhalten. Weiterhin weisen die Einsatzelemente bevorzugt Marken zur Triggerung des Meßvorganges auf. Die Einsatzelemente weisen in ihrer Lage bezüglich der Rotorbasis naturgemäß gewisse, wenn auch bei sorgfältiger Ausführung der Halterung geringe Toleranzen auf. Da der Meßvorgang im allgemeinen mit Bezug auf die Position des Einsatzelementes getriggert werden muß, ist es besonders vorteilhaft, wenn sich die diesbezüglichen Marken am Einsatzelement und nicht etwa an der Rotorbasis befinden.

Die Halterungsteile, die durch formschlüssiges Zusammenwirken mit den Einsatzelementen zu deren präziser Halterung auf der Rotorbasis bevorzugt verwendet werden, sind bevorzugt in der Nachbarschaft der Meßzellen angeordnet.

Dadurch wirken sich eventuelle Toleranzen in den Abmessungen der Einsatzelemente bezüglich der Positionierung der Meßzellen besonders wenig aus.

Bevorzugte          Einsatzelemente schließen die Reagenzien zur Durchführung von analytischen Bestimmungen in lagerfähiger und mit dem Einsatzelement transportierbarer Form ein. Derartige Analyseeinsatzelemente sind insbesondere vorteilhaft als Einmal-Elemente zu verwenden, die man auch als "Disposables" bezeichnet. Sie werden vom Hersteller bereits mit geeigneten Reagenzien für bestimmte Analysen beschickt und als Einheit mit den Reagenzien an den Verwender geliefert. Diesem wird dadurch die Handhabung einzelner, insbesondere flüssiger Reagenzien, abgenommen, was eine erhebliche Vereinfachung bedeutet. Derartige Disposables können in einer Vielzahl von Versionen hergestellt werden, wobei jede Version für eine oder mehrere gleiche oder verschiedene Analysenmethoden geeignet ist und die entsprechenden Reagenzien, aber auch entsprechend ausgeformte Fluidkanäle und sonstige Einrichtungen einschließt. Zur Durchführung einer Vielzahl verschiedener analytischer Bestimmungen muß der Benutzer dann nur noch die geeigneten Einsatzelemente auswählen und in die erfindungsgemäße Rotoreinheit einsetzen.

Ein besonders bevorzugtes Einsatzelement zur Verwendung in der erfindungsgemäßen Rotoreinheit enthält wenigstens ein Analysenreagenz in getrockneter Form und eine Vielzahl sehr kleiner miteinander in Verbindung stehender Hohlräume, welche die Probenkammer und die Meßkammer miteinander verbinden. Derartige Einsatzelemente sind in der deutschen Patentanmeldung 3 044 385 beschrieben.

Auf den Inhalt dieser Patentanmeldung wird vollinhaltlich Bezug genommen. Einzelheiten der Ausgestaltung der dort beschriebenen Einsatzelemente, die wesentlicher Bestandteil auch der vorliegenden Erfindung sind und eine besonders vorteilhafte Verwendung derselben ermöglichen, sind in dieser Patentanmeldung ausführlich beschrieben, worauf hier Bezug genommen wird, ohne den Inhalt dieser Anmeldung zu wiederholen.

Die Erfindung wird im folgenden anhand von in den Figuren dargestellten Ausführungsbeispielen näher erläutert. Es zeigen:

Fig. 1 eine perspektivische schematische Darstellung einer erfindungsgemäßen Rotoreinheit,

Fig. 2 einen Querschnitt durch eine Rotoreinheit gemäß Fig. 1,

Fig. 3 eine Aufsicht auf eine erfindungsgemäße Rotoreinheit, aus der insbesondere die Rastereinteilung deutlich wird,

Fig. 4 einen Querschnitt durch ein Analyseeinsatzelement zur Verwendung mit flüssigen Reagenzien,

Fig. 5 eine schematische Darstellung in Aufsicht einer bevorzugten Gestaltung eines Analysekanals und

Fig. 6 a Querschnittsdarstellungen durch einen Teil u. 6 b eines in einem erfindungsgemäßen Analyseelement befindlichen Analysekanals mit zusätzlichen Mischeinrichtungen.

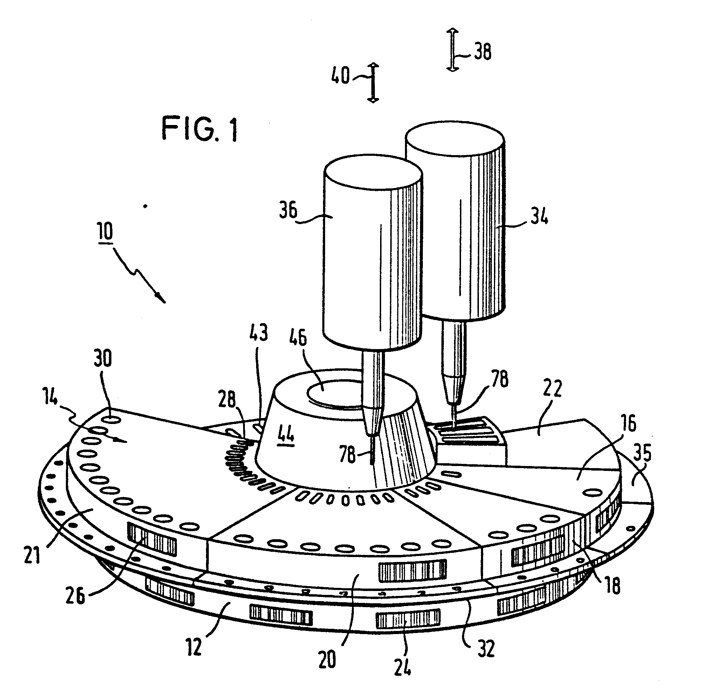

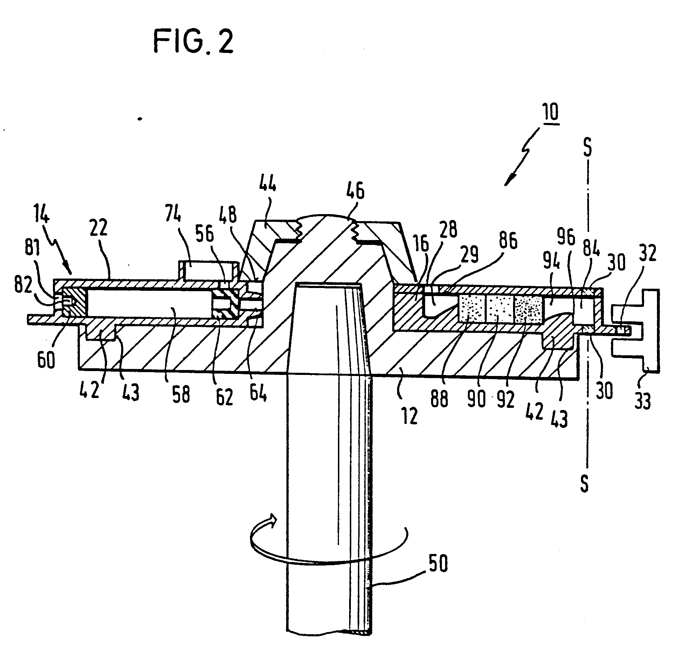

In den Fig. 1 und 2 erkennt man die in ihrer Gesamtheit mit dem Bezugszeichen 10 versehene Rotoreinheit mit einer Rotorbasis 12 und einem Rotorkopf 14. Der Begriff "Rotorkopf" schließt alle mit der Rotorbasis zum Betrieb des Zentrifugalanalysators verbindbaren Bauteile ein. Insbesondere umfaßt er die für die eigentliche Analyse notwendigen Bauelemente.

Hierzu gehören erfindungsgemäß zunächst verschiedene Analyseeinsatzelemente, beispielsweise Einfach-Analyseelemente 16 und Mehrfach-Analyseelemente, wie die dargestellten Dreifach-Analyseelemente 18, Siebenfach-Analyseelemente 20 und Elffach-Analyseelemente 21.

Weiterhin erkennt man ein kombiniertes Probengewinnungs- und -vorbereitungselement 22. Sowohl an der Rotorbasis 12 als auch an den Einsatzelementen 16, 18, 20, 21 und 22 befinden sich maschinenlesbare Codierungen 24 bzw. 26. Die Analyseelemente haben Zufuhröffnungen 28 zur Zufuhr der Probe in die Probenkammern 29, Küvettenfenster 30 und Bohrungen 32, die als Triggermarken für die Auslösung des Meßvorganges dienen. In Fig. 2 ist schematisch ein Triggersignalgeber 33 eingezeichnet, der eine Lichtquelle und einen optischen Empfänger enthält, um jedesmal beim Passieren einer Triggerbohrung ein Triggersignal zu erzeugen. Der Strahlengang für die optische Absorptionsmessung verläuft entlang der Linie S-S in Fig. 2 und ist der Übersichtlichkeit halber nicht im einzelnen dargestellt. Er ist konventionell gestaltet, wobei jedoch bevorzugt ein polychromatisches Photometer zur Anwendung kommt.

- 13 -

Bei der in den Figuren dargestellten Ausführungform der Erfindung wird eine optische Absorptionsmessung als für den Nachweis von Bestandteilen der Probe charakteristischer Parameter verwendet. Dies entspricht dem gebräuchlichsten Analyseverfahren in der klinischen Chemie, jedoch läßt sich die Erfindung auch auf andere Analyseprinzipien verwenden, bei denen als charakteristische Parameter beispielsweise die Fluoreszenz, die Lumineszenz, die Reflexion, die Radioaktivität oder elektrische Daten des Reagenzgemisches in der Meßkammer gemessen werden um daraus dieKonzentration bestimmter Bestandteile der Probe, beispielsweise von Enzymen oder Substraten einer physiologischen Flüssigkeit, zu bestimmen.

In Fig. 1 erkennt man zwei Dosiereinrichtungen 34 und 36, die der Dosierung, Verdünnung und Verteilung der Proben dienen. Bevorzugt kommen ein Proben-Reagenz-Dosierer 34, der allgemein auch als Dilutor bezeichnet wird und ein Probenverteiler 36, der allgemein als Dispensor bezeichnet wird, zur Anwendung. Beide sind vertikal beweglich in dem erfindungsgemäßen Zentrifugalanalysator angeordnet, wie dies durch die Doppelpfeile 38 und 40 angedeutet ist.

Die Einsatzelemente 16, 18, 20, 21 und 22 sind durch Haltezapfen 42 mit der Rotorbasis 12 verbindbar, die entsprechende Haltenuten 43 aufweist (Fig. 2). Die Haltenuten 43 und die Haltezapfen 42 sind in ihrer Formgebung so aufeinander abgestimmt, daß sie formschlüssig zusammenwirken und eine positionsstabile Anordnung der Einsatzelemente 16, 18, 20, 21 und 22 sicherstellen. Zur Befestigung der Einsatzelemente ist weiter ein Zentralverschluß 44 vorgesehen, der mit einem Gewinde 46 auf die Rotorbasis 12 aufschraubbar ist und der auf Auflageflächen 48 der Einsatzelemente 16, 18 20, 21 und 22 aufliegt. Die Rotorbasis 12 ist über eine Antriebsachse 50 mit dem Rotorantrieb des Zentrifugalanalysators verbunden. Die Qualität der Lagerung der Antriebsachse und das Gewicht der Rotorbasis sind wesentlich für einen vibrationsarmen Lauf des Rotors. Darüberhinaus sind die Einsatzelemente in ihrer Gewichtsverteilung bevorzugt so gestaltet, daß auch bei verschiedener Beladung des Rotors keine zu große Unwucht entsteht. Soweit der Rotor nicht vollständig beladen wird, kann es notwendig sein, entsprechende Gewichte auf der Rotorbasis anzubringen, um eine zu große Unwucht zu vermeiden.

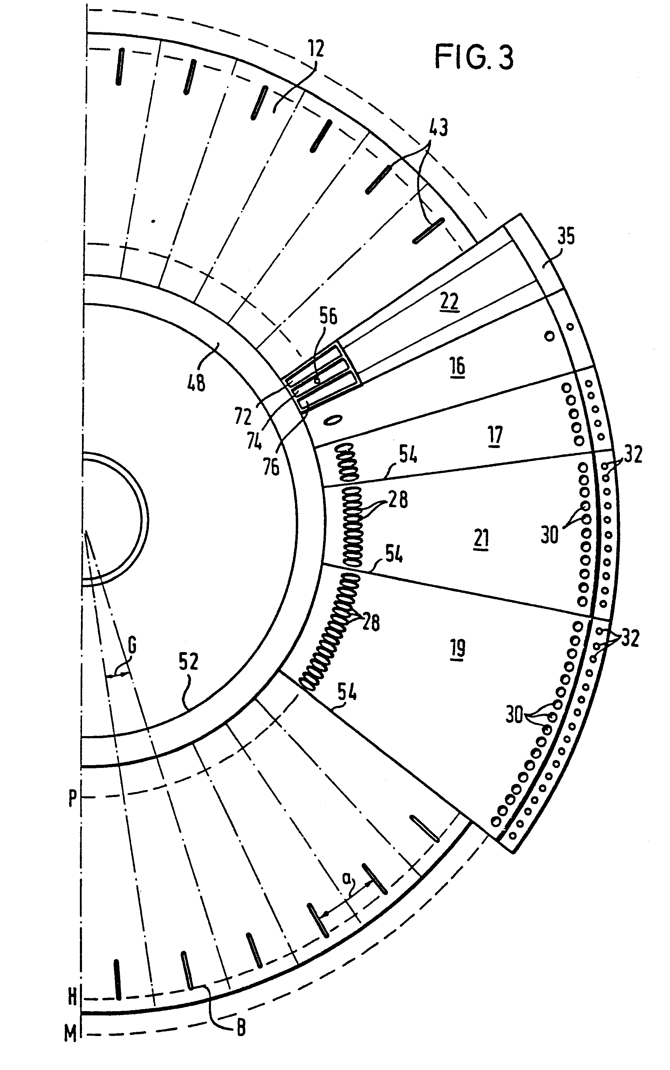

Fig. 3 zeigt eine Aufsicht auf einen erfindungsgemäßen Zentrifugalanalysator, der sich von dem in Fig. 1 und 2 dargestellten in so weit unterscheidet, als er Platz für eine größere Anzahl von Einsatzelementen bietet. Diese Figur soll insbesondere eine vorteilhafte Rasterung der Befestigung und damit der Anordnung der wahlweise auswechselbaren Einsatzelemente 16, 17, 19, 21 und 22 verdeutlichen. Man erkennt, daß die Kreisfläche der Rotorbasis 12 in eine Mehrzahl gleichgroßer ganzzahliger Bruchteile B aufgeteilt ist. In der dargestellten Ausführungsform sind diese Bruchteile Sektoren des Kreises, die an einem der inneren Begrenzung 52 der Auflagefläche 48 entsprechenden Radius abgeschnitten sind. Jeder Sektor entspricht einem bestimmten Winkelmaß des Kreises, das als Grundeinheit des Rasters der Einsatzelementanordnung bezeichnet wird und in der Figur das Bezugszeichen G trägt.

Wie aus der Figur ersichtlich ist, sind bei der bevorzugten Ausführungsform alle Haltenuten 43 für die Einsatzelemente auf dem gleichen Kreisumfang H angeordnet. Die Anordnung ist periodisch mit der Periodizitätslänge a.

Erfindungswesentlich ist nun, daß die Periodizitätslänge a der Grundeinheit G des Rasters entspricht. Dadurch wird es möglich, verschieden große Einsatzelemente, z.B. die Elemente 17, 19 und 21 wahlweise und ohne Platzverschwendung an verschiedenen Stellen der Rotorbasis mit dieser zu verbinden.

Im Unterschied zu Fig. 1 sind in Fig. 3 Analyselemente mit fünf, elf und siebzehn Analysekanälen eingezeichnet, die mit den Bezugszeichen 17, 21 und 19 versehen sind. Das dargestellte Elffach-Analyseelement 21 entspricht in seiner Größe zwei Grundeinheiten des Rasters G und weist zwei Haltezapfen 42 an seiner Unterseite auf. Das Siebzehnfach-Analyseelement 19 hat eine drei Rastergrundeinheiten G entsprechende Größe und drei Haltezapfen 42. Man erkennt leicht, daß durch diese erfindungsgemäße Konstruktion eine besonders vorteilhafte Anordnung verschiedener Einsatzelemente auf der Rotorbasis möglich ist.

Die dargestellte Ausführungsform der Einsatzelemente ist insoweit besonders einfach, als sie als einfache Sektoren mit geraden Seitenkanten ausgebildet sind. Die Erfindung schließt jedoch eine Vielzahl komplizierterer Gestaltungen der Einsatzelemente ein. Eine von der Geraden abweichende Gestaltung der Seitenkanten 54 kann ebenfalls den Eingriff von Element zu Element und damit die Genauigkeit von deren Anordnung auf der Rotorbasis 12 verbessern. Auch Einsatzelemente, die sich gegenseitig nicht berühren und mit Abstand auf der Rotorbasis befestigt sind, haben für bestimmte Anwendungsfälle Vorteile. Die Einsatzelemente müssen auch nicht alle mit gleichem radialen Abstand zum Zentrum des Rotors angeordnet sein. In diesem Fall befinden sich nicht alle Halterungen auf dem gleichen Kreisumfang.

In Fig. 2 ist auf der linken Seite ein kombiniertes Probengewinnungs- und vorbereitungselement 22 im Querschnitt zu erkennen, das in der Stammanmeldung näher beschrieben ist.

Einzelheiten zum Aufbau der Analyseelemente sind insbesondere den Fig.2, 4, 5 und 6 zu entnehmen. In Fig. 2 erkennt man im Querschnitt den Analysekanal eines besonders bevorzugten Analyseelementes. Dieses ist in der Figur mit dem Bezugszeichen 16 eines Einfach-Analyseelementes versehen. Es soll jedoch betont werden, daß die hier beschriebene Gestaltung eines Analysekanals ebenso wie eine Vielzahl anderer dem jeweiligen Analysezweck angepaßter Gestaltungen wahlweise auch in einem Mehrfach-Analyseelement, z.B. den Elementen 18, 20 und 21 verwendet werden kann. Es ist für die durch die vorliegende Erfindung erreichte Variabilität gerade wesentlich, daß verschiedene Analyseeinsatzelemente verschieden aufgebaut sind, wobei sowohl die chemische Bestückung als auch der physische Aufbau der Analysekanäle von Element zu Element, bei den Mehrfach-Analyseelementen jedoch auch innerhalb eines Elementes je nach dem Zweck des Elementes, also je nach den mit dem Element durchzuführenden analytischen Bestimmungen, verschieden sein können.

Das in der Fig. 2 im Querschnitt dargestellte Analyseelement hat eine Probenkammer 29, eine Meßkammer 84 und einen beide verbindenden Fluidkanal 86, der im vorliegenden Fall einen in der Zeichenebene von Fig. 2 im wesentlichen rechteckigen Querschnitt hat und in der Dimension senkrecht zu dieser Zeichenebene nur eine vergleichsweise geringe lichte Weite aufweist. In einem praktischen Anwendungsfall ist die Höhe des Fluidkanals 86 6 mm, die Breite 1 mm. Das Fassungsvermögen des Probenraumes 29 liegt bei dieser Ausführungsform bei ca. 20 µl. In dem Fluidkanal 86 befinden sich Vliespapiere 88, 90 und 92, die mit für die jeweilige Analyse geeigneten getrockneten Reagenzien beschickt sind. Sie weisen eine Vielzahl kleiner miteinander in Verbindung stehender Hohlräume auf, in denen sich das Reagenz befindet und in denen gleichzeitig eine Verteilung und Durchmischung der verdünnten Probe in beziehungsweise mit den Reagenzien stattfindet, wie in der deutschen Patentanmeldung 30 44 385 näher beschrieben wird. Radial nach außen hin hat der Fluidkanal einen Verbindungskanal 94, der sich in die Meßkammer 84 öffnet. Diese wird radial nach innen durch eine Barriere 96 begrenzt. Die Meßkammer 84 ist so dimensioniert, daß das Probe-Reagenzgemisch sie bei der Zentrifugation so weit füllt, daß die Küvettenfenster 30 sich vollständig im Flüssigkeitsbereich befinden.

Der Analysevorgang spielt sich nun im Prinzip so ab, daß die Probe, also Serum oder Plasma in der notwendigen Verdünnung, durch die Öffnung 28 in die Probenkammer 29 eingefüllt wird. Dann wird der Rotor auf Drehzahl gebracht, wobei die Probenflüssigkeit in die Vließpapiere 88, 90, 92 eindringt, dort die Reagenzien auflöst und mit diesen zusammen in die Meßkammer eindringt. Dort wird dann während des Zentrifugierens, prinzipiell ähnlich wie bei bekannten Zentrifugalanalysatoren, die optische Absorption bestimmt, um daraus die gewünschte Konzentration eines Bestandteils der Probe zu erhalten. Nähere Einzelheiten sind in der zitierten deutschen Patentanmeldung und weiter unten in einem Ausführungsbeispiel beschrieben.

An das Material für die Einsatzelemente, insbesondere für die Analyseelemente, werden hohe Anforderungen gestellt. Es muß inert gegen die mit ihm in Kontakt kommenden physiologischen Flüssigkeiten und Reagenzien sein und sich präzise und doch möglichst kostengünstig in den notwendigen Formen verarbeiten lassen. Darüberhinaus müssen die Küvettenfenster 30 optisch in dem notwendigen Spektralbereich durchlässig sein. Dies ist besonders bei den niedrigen, für Analysezwecke verwendeten Wellenlängen (z.B. 340 nm),ein gewisses Problem. Obwohl in der dargestellten Ausführungsform die Küvettenfenster 30 als in ein Spritzgußteil eingesetzte Elemente dargestellt sind, kann es zweckmäßig sein, einen größeren Teil oder sogar die gesamte Ober- und Unterseite der Analyseelemente aus einem entsprechenden durchsichtigen Kunststoff herzustellen.. Zwischen diesen durchsichtigen Kunststofflächen befindet sich dann sandwich-artig ein Mittelteil, das den Analysekanal mit Probenkammer 29 und Meßkammer 84 seitlich begrenzt. Auch das gesamte Einsatzelement kann selbstverständlich aus durchsichtigem Material bestehen. Geeignete optisch durchlässige Materialien sind z.B. Polymethylmethacrylat und Polystyrol.

Wie bereits im einleitenden Teil dargelegt, sind die Triggerbohrungen vorzugsweise in den Analyseelementen 16 bis 21 und nicht beispielsweise in der Rotorbasis vorgesehen, um eine präzise Zuordnung ihrer Position zu den Küvettenöffnungen 30 sicherzustellen. Ein weiterer Vorteil dieser Maßnahme besteht darin, daß ein Meßvorgang wirklich nur an solchen Rotorpositionen getriggert wird, an denen er auch notwendig ist. So hat beispielsweise das Probengewinnungs- und -vorbereitungselement 22 eine ununterbrochene Blendenfläche 35, das Einfach-Analyseelement 16 nur eine Triggermarke, wobei die gleichgroßen Dreifach-Analyseelemente 18 und Fünffach-Analyseelemente 17 drei bzw. fünf Marken haben. Wären die Triggermarken an der Rotorbasis vorgesehen und damit nicht mit den Einsatzelementen auswechselbar, würden die Meßvorgänge auch an solchen Positionen getriggert, an denen gar keine Messung erforderlich ist. Insbesondere bei Verwendung einer Blitzlampe
für das Photometer des Zentrifugalanalysators ergibt
sich eine erhebliche Energieersparnis und Erhöhung der
Lebensdauer, wenn keine unnötigen Meßvorgänge und damit
Blitze durch die Triggerung ausgelöst werden.

Aus Fig. 2 ist auch zu ersehen, daß in der eingangs
geschilderten Art und Weise die Halterung der Einsatzelemente, hier also der Haltezapfen 42 sich in
der Nähe der Küvette befindet. Eventuelle Maßabweichungen
bei der Herstellung der Einsatzelemente oder durch
thermische Ausdehnung wirken sich durch diese Maßnahme
nur verhältnismäßig wenig auf den Abstand der Elementhalterung 42, 43 zu den Küvettenfenstern 30 aus.

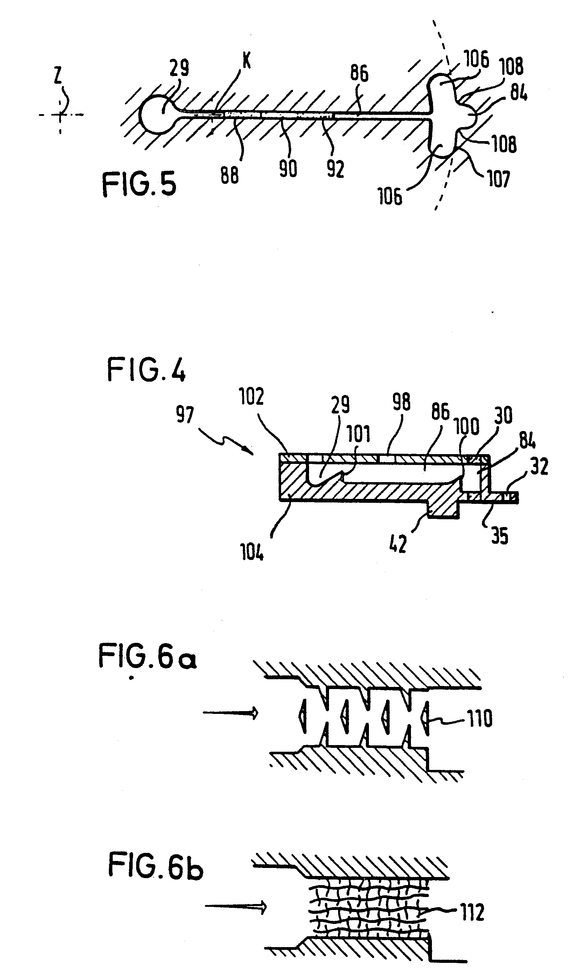

Wie bereits erwähnt, enthalten die Analyseelemente die
Reagenzien bevorzugt in getrockneter Form, weil dadurch eine besonders einfache Bedienung des Gerätes bei gleichzeitig
höchster Flexibilität ermöglicht wird. Für besondere
Reaktionen kann es aber auch zweckmäßig sein, flüssige
Reagenzien zu verwenden. Auch diese können, wie beispielsweise die US-A-4 135 883 zeigt, vorgepackt sein. Die Figur
zeigt ein Beispiel, bei dem das Reagenz erst im Gerät
in den Analysekanal eingefüllt wird. Fig. 4 zeigt
ein geeignetes Analyseelement 97 in einem radialen Querschnitt durch die Mitte seines Analysekanals. Man erkennt,
daß der Fluidkanal 86 hier einen für die Aufnahme eines
Reagenz geeigneten Hohlraum bildet, welcher durch die
Barrieren 100 und 101 begrenzt wird. Im Deckelteil 102 des
Flüssig-Analyseelementes 97 befindet sich eine Einfüllöffnung 98 für das Reagenz. Probenkammer 29, Fluidkanal 86,

Meßkammer 84 und Haltezapfen 42 sind am Unterteil. 104 des Flüssig-Analyseelementes 97 ausgeformt, welches mit dem Deckelteil 102 verschweißt ist.

Zum Betrieb des Flüssig-Analyseelementes wird ein entsprechendes Reagenz von Hand oder mit Hilfe eines in Fig. 1 nicht dargestellten, auf einem entsprechenden. Kreisumfang des Zentrifugalanalysators angeordneten, Dosiergerätes durch die Öffnung 98 zugegeben. Der anschließende Analysegang läuft analog wie bei den bekannten Zentrifugalanalysatoren ab, wobei der Vorteil der erfindungsgemäßen Einrichtung darin besteht, daß mit verschiedenen Reagenzien gefüllte und eventuell verschieden gestaltete Flüssig-Analyseelemente 97 als Einsatzelemente in einer Rotoreinheit verwendet werden können.

Fig. 5 zeigt eine besondere Ausführungsform eines Analysekanals eines Analyseelementes 16, 17, 18, 19, .20 oder 21. Dargestellt ist ein Querschnitt etwa in der Mitte der Höhe der Vliespapiere mit den Reagenzien nach Fig. 2. Der Querschnitt verläuft parallel zur Rotorfläche. Man erkennt die Probenkammer 29 und den Fluidkanal 86, sowie die Vliespapiere 88, 90 und 92 mit den Reagenzien. Die Besonderheit der dargestellten Ausführungsform besteht darin, daß sich radial nach innen an die Meßkammer 84 zwei Vorkammern 106 anschließen, die einer ergänzenden Mischung der aus den Vliespapieren 88, 90 und 92 herausgelösten Reagenzien mit der Probenlösung dienen.

Um diese Zusatzmischwirkung zu erreichen, wird der Zentrifugalanalysator in einem Mischlauf unmittelbar vor dem Messen mehrfach beschleunigt und abgebremst, wobei das Reaktionsgemisch abwechselnd zumindest teilweise in die Vorkammern 106 eindringt und dann, wenn die Beschleunigung in Umfangsrichtung (Tangentialbeschleunigung) aufhört, wieder in die Meßkammer 84 zurückfließt. Durch diesen Vorgang wird eine sehr gute Durchmischung erreicht. Eine auf den gleichen Prinzipien basierende Mischeinrichtung kann auch eine andere als die hier dargestellte Gestaltung aufweisen, wobei lediglich wesentlich ist, daß die Vorkammern 106 radial einwärts von der Meßkammer 84 liegen und über entsprechende kleine Barrieren 108 mit dieser in Verbindung stehen, wobei die Barrieren eine solche Höhe haben, daß sie von der Flüssigkeit beim Beschleunigen oder Abbremsen des Rotors wenigstens teilweise überwunden werden können und andererseits das Zurückfließen der Flüssigkeit bei fehlender Tangentialbeschleunigung nicht behindern.

In einer bevorzugten Ausführungsform der Erfindung sind die Wände 107 der Vorkammern 106 mit einer Krümmung versehen, die im dargestellten Querschnitt einem Kreis um einen Punkt entspricht, der auf der Verbindungslinie zwischen der Meßkammer 84 und dem Zentrum des Analysenrotors zwischen diesen beiden Punkten liegt. Dieser Sachverhalt ist in der Figur durch gestrichelte Hilfslinien angedeutet, wobei der Krümmungsmittelpunkt mit dem Bezugszeichen K und das Rotorzentrum mit dem Bezugszeichen Z markiert sind.

Die Fig. 6a und 6b zeigen andere zur zusätzlichen Durchmischung des Reaktionsgemisches geeignete Einrichtungen. Es handelt sich um statische Mischeinrichtungen, die in den Analyseelementen im Fluidkanal vor der Meßkammer 84 angeordnet sein können. Die Darstellung ist ein Querschnitt in der Ebene wie in den Fig. 2 und 5. Die Flußrichtung des Reaktionsgemisches ist durch Pfeile angegeben. Die Mischwirkung wird bei der Fig. 5 durch Verdrängungskörper 110 erzielt, die den Strom der Flüssigkeit teilen und wieder zusammenführen, um dadurch eine Mischwirkung zu erreichen. Diese Verdrängungskörper können einstückig an die entsprechenden Bauteile des Analyseelementes angegossen sein. Eine andere Ausführungsform ist in Fig. 7b dargestellt. In diesem Fall dient eine in das Analyseelement eingebrachte und an entsprechender Stelle im Fluidkanal 86 befestigte Netzstruktur 112, um den Reagenzgemischstrom vielfältig aufzuteilen, wieder zusammenzuführen und damit zu durchmischen.

Im folgenden wird die Betriebsweise des erfindungsgemäßen Gerätes erläutert, wobei die bereits zuvor näher erläuterten Zwischenschritte hier nur noch kurz erwähnt werden.

Zur Programmierung des Gesamtgerätes wird bevorzugt eine Anforderungskarte verwendet, welche von dem untersuchenden Arzt ausgefüllt werden kann. Darin ist in maschinell lesbarer Form eine Codierung für die Probe enthalten, der der Name des Patienten zugeordnet ist. Diese Information wird als Probenidentifikation bezeichnet. Durch entsprechende maschinenlesbare Markierung wird das sogenannte Anforderungsprofil festgelegt, d.h. der Arzt legt fest, welche Bestandteile der Probe analytisch bestimmt werden sollen. Diese Information wird im folgenden als Analysenidentifikation bezeichnet.

Mit Hilfe des, wie vorstehend beschrieben, als Spritze verwendbaren Probenentnahme- und -aufbereitungselements wird dem Patienten eine Blutprobe entnommen. Die Probenidentifikation wird als Codierung 26 gleichzeitig auf dem Einsatzelement 22 angebracht. Dies kann z.B. durch Übertragen eines auf der Anforderungskarte befindlichen entsprechenden Klebeetiketts mit einer Balkencodierung auf die entsprechende Fläche des Probengewinnungs- und -vorbereitungselements 22 geschehen.

Im klinisch-chemischen Labor, in dem das Gerät aufgestellt ist, werden die Anforderungskarten mehrerer Patienten nacheinander in eine entsprechende Leseeinrichtung des Gerätes eingegeben. Das Gerät erfährt auf diese Weise sowohl die Probenidentifikation als auch die Analysenidentifikation. Aus diesen Angaben bestimmt ein in das Gerät eingebauter Rechner die notwendige Beladung des Rotors mit den Einsatzelementen für die durchzuführenden Analysen. Entsprechende Anweisungen für die Rotorbeladung werden auf einem Bildschirmgerät oder per Drucker angezeigt. Die Beladung kann auch vollautomatisch erfolgen. Nach diesen Anweisungen wird die Beladung der Rotoren durchgeführt. Dies geschieht bei der zuvor dargestellten Ausführungsform des Gerätes dadurch, daß entsprechend den Anweisungen Probengewinnungs- und -aufbereitungselemente 22 und Analyseelemente 16 bis 21 auf die Rotorbasis 12 aufgesetzt werden. Nachdem die Rotorbasis 12 beladen ist, wird der Zentralverschluß 44 verschlossen. Die Beladung des Rotors geschieht in vollständig auf den Einzelfall abgestimmter Art und Weise. Wird beispielsweise nur eine Analyse benötigt, so wird zusätzlich zu dem Probengewinnungs- und -vorbereitungselement 22 lediglich ein Einfach-Analyseelement 16 aufgesetzt. Danach kann die nächste Probe aufgebracht werden. In anderen Fällen wird ein bestimmtes sich häufiger wiederholendes Profil angefordert, d.h. eine Reihe von für ein bestimmtes Krankheitsbild wesentlichen Analysen. Für derartige Zwecke können entsprechende Mehrfach-Analyseelemente 18, 20, 21 vorgesehen sein, die in ihren einzelnen Analysekanälen verschiedene Reagenzien enthalten und bei denen die Analysekanäle möglicherweise auch in der Form verschieden ausgebildet sind. Derartige Profilanalyseelemente ermöglichen eine besonders kostengünstige Bestimmung häufig wiederkehrender Profile. Wenn in anderen Fällen die gleiche Analyse von einer Mehrzahl von Proben erforderlich ist, können wiederum andere Mehrfach-Analyseelemente zum Einsatz kommen, die in mehreren Analysekanälen Reagenzien für die gleiche Bestimmung erhalten. In diesem Fall werden nacheinander die entsprechenden mit den Proben gefüllten Probengewinnungs- und -vorbereitungselemente nacheinander aufgesetzt und anschließend das entsprechende Mehrfach-Analyseelement. Schließlich können umfassende und spezielle Analyseprofile durch eine Kombination von Einfach- und Mehrfach-Analyseelementen erfüllt werden. Man erkennt, daß durch die erfindungsgemäße Einrichtung eine große Flexibilität möglich wird. Die Handhabung ist auch besonders einfach, weil insbesondere bei der Verwendung vorgepackter trockener Reagenzien keine komplizierten manuellen Schritte mehr erforderlich sind.

Wenn ein großer Probendurchsatz gefordert wird, kann es sinnvoll sein, wenn die Beladung der Rotoreinheit mit den Einsatzelementen außerhalb des Zentrifugalanalysators stattfindet. Für diesen Zweck ist es sinnvoll, Zwischenscheiben vorzusehen, die zwischen der Rotorbasis und den Einsatzelementen in das Gerät eingebaut werden und dazu dienen, außerhalb des Gerätes in entsprechender Weise mit den Einsatzelementen beladen zu werden. Die Einheit aus Zwischenscheibe und Einsatzelementen, die in diesem Fall den Rotorkopf bildet, wird dann in ihrer Gesamtheit in den Zentrifugalanalysator eingesetzt. Die Zwischenscheiben erlauben es, mehrere Rotorköpfe mit Einsatzelementen zu bestücken und damit für die Messung vorzubereiten, während der Zentrifugalanalysator beispielsweise gerade andere Analysen durchführt.

Nachdem der mit den Einsatzelementen bestückte Rotorkopf in das Gerät eingesetzt und mit der Rotorbasis verbunden ist, folgt der Probengewinnungslauf des Rotors, bei dem in den Probengewinnungs- und -vorbereitungselementen die Proben, d.h. Serum oder Plasma, in der oben beschriebenen Art und Weise durch Zentrifugieren gewonnen werden.

Danach folgt die Probenaufbereitung, zu der insbesondere die entsprechende Verdünnung der Probe gehört. Dabei tritt eine Schrittschaltfunktion des Rotorantriebs in Kraft. Der Rotor wird in eine Position gebracht, in der der Dilutor 34 genau über der Entnahmeöffnung 56 eines Probengewinnungs- und -vorbereitungselementes 22 steht. Der Dilutor 34 bewegt sich danach vertikal nach unten, durchstößt den Verschlußstopfen 62, entnimmt durch Ansaugen die Probe und fährt wieder nach oben, um nacheinander in der für Dilutoren bekannten Art und Weise verschieden verdünnte Proben in die Verdünnungskammern 72, 74 und 76 zu geben. Dabei wird durch den Schrittschaltantrieb der Rotor jeweils in die richtige Position unter dem Dilutor 34 gebracht. Die genaue Positionierung des Rotors wird durch die an der Rotorbasis vorgesehenen Codierungen 24 erleichtert, die von einem geräteseitig vorhandenen Lesegerät gelesen werden und auf diese Weise eine präzise Rotorsteuerung ermöglichen.

Die in die Zufuhröffnungen 28 der Analyseelemente überführte Probenmenge ist sehr klein. Der Dispensor 36 ist dazu vorgesehen, eine für alle aus einer bestimmten Verdünnung einer bestimmten Probe durchzuführenden Analysen ausreichende Menge verdünnter Proben anzusaugen und in die entsprechenden Zufuhröffnungen der Probenkammern zu verteilen. Selbstverständlich können auch die Funktionen des Dilutors 34 und des Dispensors 36 von einer Einheit erfüllt werden, jedoch ist die Verwendung zweier getrennter Einheiten insofern vorteilhaft, als sich eine schnellere Beladung der Analyseelemente ergibt.

Während der Probenverdünnung und -verteilung bewegt sich der Rotor schrittweise entsprechend durch die Codierungen 24 unter Kontrolle der Zentraleinheit des Zentrifugalanalysators gesteuert hin und her. Die Dosierungseinheiten 34 und 36 müssen dadurch nur Vertikalbewegungen durchführen. Durch die daraus resultierende mechanische Einfachheit des diese Bewegung ermöglichenden Antriebs wird eine kostengünstige Bauweise und große Zuverlässigkeit des Gerätes erreicht.

Vor dem sich nun anschließenden Misch- und Meßlauf werden noch die eventuell vorhandenen Flüssig-Analyseelemente 97 mit Reagenzien beschickt.

Nach vollständiger Probenverdünnung und -verteilung folgt der Misch- und Meßlauf, bei dem der Zentrifugalanalysator auf die zum Mischen und anschließenden Messen notwendigen Drehzahlen gebracht wird. Während dieses Laufes werden von dem Gerät die Codierungen 26 an den Einsatzelementen 16, 18, 20, 21 und 22 gelesen und mit der gespeicherten Probenidentifikation und Analysenidentifikation verglichen. Sollte sich eine Abweichung herausstellen, wird sofort Fehleranzeige gegeben. Dadurch wird jede Fehlanalyse durch falsches Beladen der Rotoren mit den Einsatzelementen mit Sicherheit ausgeschlossen. Diese Kontrolle kann selbstverständlich auch bereits nach dem Beladen vor oder während des Probengewinnungslaufes erfolgen.

Für die verschiedenen Rotorläufe sind im allgemeinen verschiedene Drehzahlen notwendig. Selbstverständlich hängen die notwendigen Drehzahlen von dem zur Anwendung kommenden Rotordurchmesser ab. Die höchsten Drehzahlen werden im Normalfall für die Zentrifugation zur Gewinnung der Serum- bzw. Plasmaproben benötigt. Sie liegen in der Größenordnung von mehreren tausend Umdrehungen pro Minute bei einem wirksamen Rotordurchmesser von ca. 25 cm.

Die Drehzahlen während des Misch- und Meßlaufes des erfindungsgemäßen Gerätes müssen auf die jeweils zur Anwendung kommenden Analyseeinsatzelemente abgestimmt sein. Bei Verwendung von Flüssig-Analyseelementen können die von konventionellen Zentrifugalanalysatoren dem Fachmann bekannten Erfahrungen benutzt werden. Soweit gemäß besonders bevorzugter Ausführungsform der vorliegenden Erfindung Einsatzelemente gemäß der deutschen Patentanmeldung 30 44 385 verwendet werden, sind auch die Drehzahlen im Misch- und Meßlauf des Gerätes nach den in dieser Patentanmeldung gemachten Angaben zu wählen. Bei einem

0141009

- 28 -

Beispiel dieser Anmeldung kommt ein vergleichsweise kleiner Rotor mit 33 mm Durchmesser zur Anwendung, bei dem der Meßkreisdurchmesser 28 mm beträgt. Der Analysekanal ist gemäß dem in Fig.5 dargestellten Ausführungsbeispiel gestaltet, wobei der Fluidkanal 86 eine Breite von 1 mm und eine Höhe von 6 mm hat. In dem Fluidkanal 86 befinden sich mit getrockneten Reagenzien beschickte Vliespapiere. Deren radialer Abstand vom Rotorzentrum beträgt ungefähr 4 bis 10 mm. Nähere Angaben über die chemische Zusammensetzung der getrockneten Reagenzien und weitere konstruktive Einzelheiten sind der zitierten Anmeldung zu entnehmen. Der Meßlauf besteht bei den beschriebenen Abmessungen beispielsweise für die in der zitierten Anmeldung beschriebene Bestimmung von Glucose aus folgenden Schritten:

1. Zentrifugation bei 2880 Umdrehungen pro Minute für 1 bis 25 Sekunden. Dabei dringt die verdünnte Probe in die ersten Vliespapiere ein und löst das Reagenz auf.

2. Zentrifugation bei 12 000 Umdrehungen pro Minute für 5 Sekunden. Hierdurch wird die Lösung aus dem Vlies in die Küvette getrieben. Auf dem Vlies bleibt nur eine minimale Menge Lösung zurück.

3. Eine Sekunde Beschleunigung auf 12 000 Umdrehungen pro Minute und Anhalten des Rotors während einer weiteren Sekunde. Dieser Vorgang wird 6 bis 20 mal wiederholt, wobei durch die Tangentialbeschleunigung die Lösung in die Vorkammern 106 getrieben und dadurch ein Mischeffekt erzielt wird.

- 29 -

4. Vier Sekunden Zentrifugation bei 12 000 Umdrehungen
pro Minute um Verunreinigungen zu sedimentieren und
Luftbläschen auszutreiben.

5. Messung bei 2 880 Umdrehungen pro Minute.

Wenn Rotoren eines anderen Durchmessers zur Anwendung
kommen bzw. die Einsatzelemente mit den Analysereagenzien
einen anderen radialen Abstand vom Zentrum des Rotors
haben, sind entsprechende Drehzahlen zu verwenden, die
zu den gleichen Werten der Zentrifugalbeschleunigung
führen. Je nach den verwendeten Dimensionen und analytischen Verfahren wird aber von Fall zu Fall auch eine
empirische Bestimmung der bestgeeigneten Drehzahlen notwendig sein.

Da alle Einsatzelemente, die bei einem bestimmten Rotorlauf mit dem Rotor verbunden sind, dem gleichen Drehzahlprogramm unterliegen, müssen die gleichzeitig zur Anwendung kommenden analytischen Bestimmungen so aufeinander
abgestimmt sein, daß sie mit dem gleichen Drehzahlprogramm
durchgeführt werden können. Dabei kann man sich, wie oben
erwähnt, auch zu Nutze machen, daß die Zentrifugalbeschleunigung vom Zentrum zur Peripherie des Rotors zunimmt. Die
radiale Anordnung beispielsweise der Vliespapiere oder anderen Reagenzienträger innerhalb des Einsatzelementes und/
oder die radiale Positionierung des Einsatzelementes selbst
sind also beispielsweise bestimmend für die Zentrifugalkräfte, denen die verdünnte Probenflüssigkeit bzw. die
Reagenzlösung in einem solchen Reagenzienträger unterliegt.

Weitere Maßnahmen zur Anpassung der verschiedenen analyti-

schen Bestimmungen auf die gegebenen Bedingungen sind in der zitierten                    Patentanmeldung beschrieben. Durch entsprechende Abstimmung der erwähnten verschiedenen Maßnahmen ist es möglich, Einsatzelemente für eine Reihe analytischer Bestimmungen zu schaffen, die mit dem gleichen Misch- und Meßlauf des Zentrifugalanalysators gemessen werden können.

Patentansprüche

1. Analyseeinsatzelement (16) für die Rotoreinheit (10)
   eines Zentrifugalanalysators zur analytischen Bestimmung
   mindestens eines Bestandteils einer Probenflüssigkeit

   mit mindestens einem vorgepackten Reagenz, das dergestalt
   darin enthalten ist, daß es während der Rotation der Rotoreinheit (10) mit der Probe vermischt wird,

   mit Halterungsteilen (42) zur Halterung an der Rotorbasis (12)
   der Rotoreinheit (10) und

   mit einer Meßkammer (84) zum Messen eines für den Nachweis
   von Bestandteilen der Probe charakteristischen Parameters,

   dadurch gekennzeichnet,

   daß es Kammern (29) für die Aufnahme der Probenflüssigkeit
   und Fluidkanäle (86) zur Verbindung der Probenkammern (29)
   mit den ihnen zugeordneten Meßkammern (84) aufweist,

   daß die Fluidkanäle (86) mindestens ein vorgepacktes Reagenz
   enthalten und

   daß die Halterungsteile (42) dergestalt ausgebildet sind,
   daß das Analyseelement auf der Rotorbasis (12) des Rotors (10)
   im Betrieb positionsstabil in einer solchen Position gehalten wird, daß die Probenkammern (29) radial einwärts von
   den Meßkammern (84) liegen,

   so daß die Probenflüssigkeit von den Probenkammern (29)
   bei Drehung des Rotors unter Einwirkung der Zentrifugalkraft durch die Fluidkanäle (86) in die Meßkammern (84)
   getrieben wird, wobei es mit dem Reagenz in Kontakt gebracht
   und mindestens teilweise vermischt wird.

b.

2. Analyseeinsatzelement nach Anspruch 1, dadurch gekennzeichnet, daß der Fluidkanal (86) eine dem jeweiligen Analysezweck angepaßte Gestaltung aufweist.

3. Analyseeinsatzelement nach einem der Ansprüche 1 oder 2, dadurch gekennzeichnet, daß es als Mehrfach-Analyseelement (17 bis 21) ausgestaltet ist, wobei es mindestens zwei jeweils eine Probenkammer (29), einen Fluidkanal (86) und eine Meßkammer (84) aufweisende Analysekanäle hat.

4. Analyseeinsatzelement nach einem der Ansprüche 1 bis 3, dadurch gekennzeichnet, daß es Codierungen (26) bezüglich der Probe und/oder der zu bestimmenden Bestandteile der Probe trägt.

5. Analyseeinsatzelement nach einem der Ansprüche 1 bis 4, dadurch gekennzeichnet, daß es Marken (32) zur Triggerung des Meßvorganges aufweist.

6. Analyseeinsatzelement nach einem der Ansprüche 1 bis 5, dadurch gekennzeichnet, daß die Halterungsteile (42) so ausgebildet sind, daß sie formschlüssig mit entsprechenden Halterungsteilen der Rotoreinheit (10) zusammenwirken.

7. Analyseeinsatzelement nach einem der Ansprüche 1 bis 6, dadurch gekennzeichnet, daß die Halterungsteile (42) in der Nachbarschaft der Meßkammern (84) angeordnet sind.

8. Analyseeinsatzelement nach einem der Ansprüche 1 bis 7, dadurch gekennzeichnet, daß das Reagenz ein Trockenreagenz ist.

9. Analyseeinsatzelement nach Anspruch 8, dadurch gekennzeichnet, daß der Fluidkanal (86) einen Träger (88, 90,
92) enthält, der mit dem Reagenz beschickt ist und eine
Vielzahl kleiner, miteinander in Verbindung stehender
Hohlräume aufweist.

10. Analyseeinsatzelement nach einem der Ansprüche 1 bis 9,
dadurch gekennzeichnet, daß der Fluidkanal (86) eine
radial auswärts vom Reagenzienbereich angeordnete Zusatzmischeinrichtung (110, 112, 106) einschließt.

FIG. 1

0141009

## FIG. 2

3

0141009

FIG. 3

4

0141009

FIG.5

FIG.4

FIG.6a

FIG.6b